# EUROPEAN PATENT SPECIFICATION

(11) **EP 4 239 220 B1**
(45) Date of publication and mention of the grant of the patent: **18.11.2026**
(21) Application number: 22171296.1
(22) Date of filing: 03.05.2022
(51) Int. Cl.: F16H 55/14, F16H 3/66, F16H 57/021

(54) **POWER TRANSMISSION DEVICE AND AUTOMOBILE INCLUDING THE SAME**
KRAFTÜBERTRAGUNGSVORRICHTUNG UND KRAFTFAHRZEUG
DISPOSITIF DE TRANSMISSION DE PUISSANCE ET VÉHICULE AUTOMOBILE LE COMPRENANT

(30) Priority: 02.03.2022 KR 20220027006
(43) Date of publication of application: 06.09.2023
(73) Proprietor: Hyundai Mobis Co., Ltd., Gangnam-gu Seoul 06141 (KR)
(72) Inventor: SHIN, Kyeong Ho, 16891 Yongin-si (KR)
(74) Representative: Frenkel, Matthias Alexander

(56) References cited:
- EP-A1- 3 584 102
- WO-A1-2019/074119
- CN-A- 103 867 684
- JP-A- 2001 032 888
- JP-A- 2013 082 321
- US-A1- 2012 202 640
- US-A1- 2017 067 512

## Description

### TECHNICAL FIELD

The following description relates to a power transmission device and an automobile including the power transmission device.

### BACKGROUND

In-wheel systems are systems, in which motors providing rotational force are mounted inside wheels, and can reduce the volume occupied by components that drive wheels. These in-wheel systems are generally classified as a direct driving type, in which as a motor is directly connected to a wheel, rotational force of the motor is directly transmitted to the wheel, an indirect driving type, in which rotational force of a motor is transmitted to a wheel via a decelerator. Among these types, in case of an indirect driving-type in-wheel system, the rotational force of the motor is transmitted to the wheel via the decelerator, and thus torque can increase. Therefore, a motor having a relatively small output can be mounted.

Meanwhile, in order to increase the output torque transmitted to the wheel in the indirect driving-type in-wheel system, it is necessary to mount a decelerator capable of achieving a large speed reduction ratio. However, according to the related art, due to the volume occupied by the decelerator in the in-wheel system, there is a limit to the speed reduction ratio that can be achieved by the indirect driving-type in-wheel system. In particular, when two or more decelerators are provided in the in-wheel system to achieve a large speed reduction ratio, the size of the in-wheel system in the width direction becomes excessively increased. CN 103 867 684 discloses a double-speed ratio gyration reducer used for an apparatus with various working conditions, wherein the reducer is described to comprise a first planetary gear transmission unit, a second planetary gear clutch transmission unit and a hydraulic system, wherein the first planetary gear transmission unit comprises a sun gear connected to a driving shaft, a ring-shaped gear, at least three planetary gears, and a planet carrier; the second planetary gear transmission unit comprises a sun gear connected to the planet carrier of the first planetary gear transmission unit, a fixed ring-shaped gear, at least three planetary gears and a planet carrier, and the hydraulic clutch system selectively allows the ring -shaped gear of the first planetary gear transmission unit to be fixed or rotate freely relative to the driving shaft. EP 3 584 102 A1 discloses an electric vehicle drive device. In the document the electric vehicle drive device is described to include a first motor, a second motor, and a transmission mechanism coupled to the first motor and the second motor and capable of switching a reduction ratio, wherein the transmission mechanism includes a sun gear shaft coupled to the first motor, wherein the first motor includes a first stator core, a first rotor core disposed radially outward of the first stator core, and a first rotor holding member that couples the first rotor core and the sun gear shaft.

### SUMMARY

The invention is defined by the combination of features of claim 1, the dependent claims show further advantageous embodiments of the invention.

### BRIEF DESCRIPTION OF THE DRAWINGS

FIG. 1 is a cross-sectional view illustrating a power transmission device and a wheel according to the present invention.
FIG. 2 is a cross-sectional view illustrating structures of a first decelerator and peripheral components of the power transmission device according to the present invention.
FIG. 3 is a cross-sectional view illustrating structures of a second shaft member and a second sun gear, which are provided in a second decelerator, and peripheral components in the power transmission device according to the present invention.
FIG. 4 is a side view illustrating a first shaft member and a first sun gear which are provided in the first decelerator of the power transmission device according to the present invention.
FIG. 5 is a side view illustrating the second sun gear provided in the second decelerator of the power transmission device according to the present invention.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

Hereinafter, a power transmission device and an automobile according to the present inventionare described with reference to the drawings.

### Power transmission device

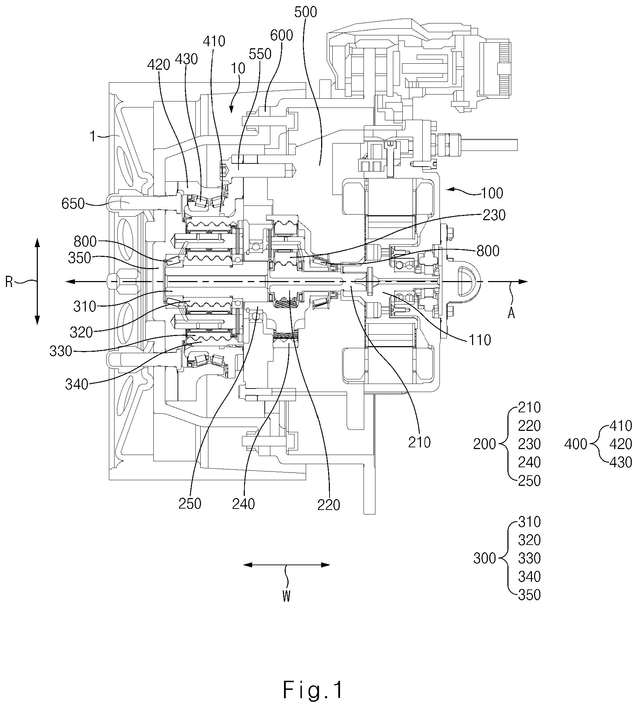

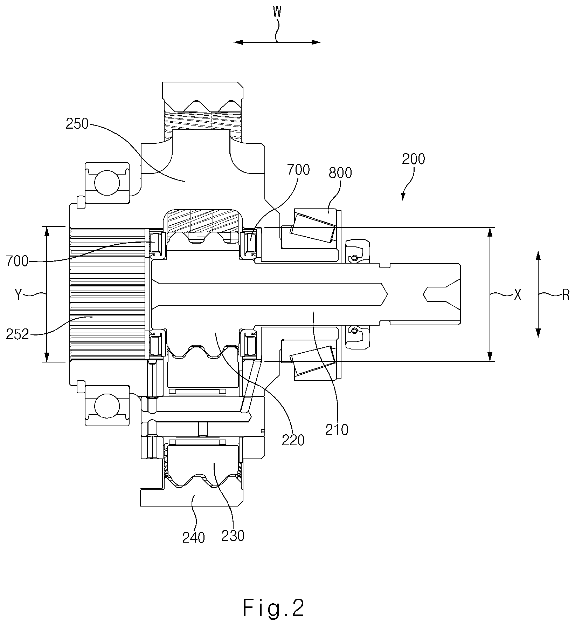

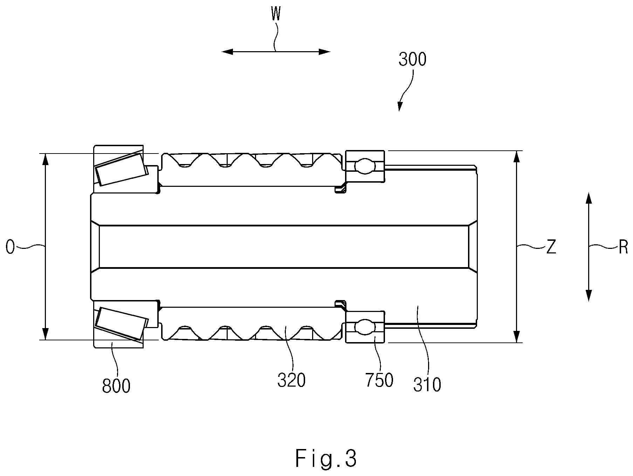

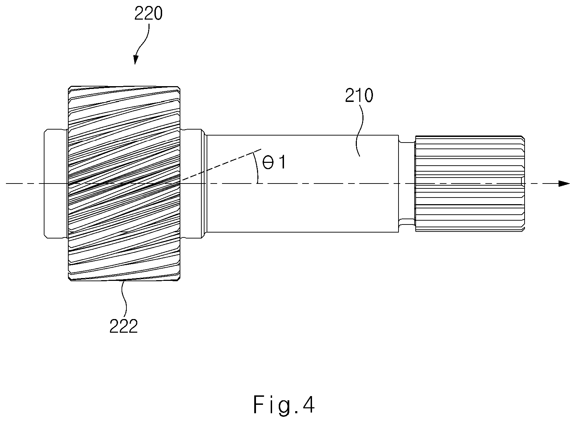

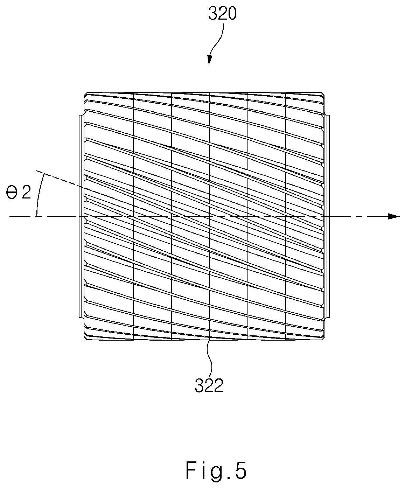

FIG. 1 is a cross-sectional view illustrating a power transmission device and a wheel according to the present invention, and FIG. 2 is a cross-sectional view illustrating structures of a first decelerator and peripheral components of the power transmission device according to the present invention. FIG. 3 is a cross-sectional view illustrating structures of a second shaft member and a second sun gear, which are provided in a second decelerator, and peripheral components in the power transmission device according to the present invention, and FIG. 4 is a side view illustrating a first shaft member and a first sun gear which are provided in the first decelerator of the power transmission device according to the present invention. Also, FIG. 5 is a side view illustrating the second sun gear provided in the second decelerator of the power transmission device according to the present invention.

Referring to FIG. 1, a power transmission device 10 according to the present invention includes a motor 100 including a rotary shaft 110, a first decelerator 200 coupled to the rotary shaft 110 of the motor 100 and receiving power from the rotary shaft 110, and a second decelerator 300 coupled to the first decelerator 200 and receiving the power from the first decelerator 200. That is, according to the present invention, two decelerators 200 and 300 are provided in the power transmission device 10. A rotation speed may be reduced firstly as the power is transmitted from the rotary shaft 110 of the motor 100 to the first decelerator 200, and the rotation speed may be reduced secondly as the power is transmitted from the first decelerator 200 to the second decelerator 300. More specifically, both the first decelerator 200 and the second decelerator 300 may be provided on one side of the motor 100. FIG. 1 illustrates, as one example, a state in which both the first decelerator 200 and the second decelerator 300 are provided on the left side of the motor 100.

Also, the power transmission device 10 may further include a wheel bearing 400 coupled to one side of the second decelerator 300. In one example, the power transmission device 10 according to the present invention may be configured to transmit a driving force to the wheel 1.

Meanwhile, according to the present invention, a portion of the first decelerator 200 may be inserted into the rotary shaft 110 and coupled thereto. More specifically, referring to FIG. 1, a groove having a shape recessed along the extension direction of the rotary shaft 110 of the motor 100 may be formed in the rotary shaft 110, and a portion of the first decelerator 200 may be inserted into the groove and coupled thereto.

As described above, in a case where a portion of the first decelerator 200 is inserted into the rotary shaft 110 and coupled thereto, not only can sealability inside the first decelerator 200 be enhanced, but also assemblability of the power transmission device 10 can be enhanced because the first decelerator 200 can be modularized, when compared to a case where a rotary shaft is inserted into a first decelerator and coupled thereto. Effects obtained by those described above will be described later.

Continuing to refer to FIGS. 1 and 2, the first decelerator 200 includes: a first shaft member 210, a partial region of which is inserted into the rotary shaft 110 and coupled thereto; and a first sun gear 220 fixed to the first shaft member 210. More specifically, the first sun gear 220 is fixed to the outer surface of the first shaft member 210 in a radial direction R. Meanwhile, in the specification, the radial direction R is defined as a direction that is perpendicular to a direction in which the rotary shaft 110 extends, and a width direction W is defined as the direction in which the rotary shaft 110 extends, that is, a direction perpendicular to the radial direction R. In one example, the first shaft member 210 and the first sun gear 220 may be integrally formed. In this case, it may be advantageous in terms of enhancing the sealability inside the first decelerator 200. However, unlike that described above, the first shaft member 210 and the first sun gear 220 may be configured to be separate from each other.

The first decelerator 200 further includes: a first planetary gear 230 provided on the outside of the first sun gear 220 in the radial direction R and engaging with the first sun gear 220; a first ring gear 240 provided on the outside of the first planetary gear 230 in the radial direction R and engaging with the first planetary gear 230; and a first carrier 250 coupled to the first planetary gear 230.

According to the present invention on the basis of the above description, the first shaft member 210 is inserted into the rotary shaft 110 of the motor 100 and coupled thereto, and thus a region, in which the motor 100 and the first shaft member 210 are coupled, may be spaced apart from other components of the first decelerator 200, such as the first sun gear 220, the first planetary gear 230, the first ring gear 240, and the first carrier 250. Thus, compared to a case where a rotary shaft of a motor is directly coupled to a first sun gear, the other components of the first decelerator 200 may be further spaced apart from the motor 100, and thus the sealability of the other components of the first decelerator 200 from the outside may be further enhanced. Also, coupling and uncoupling between the motor 100 and the first decelerator 200 may be established only with coupling and uncoupling between the first shaft member 210 and the rotary shaft 110, and thus modularization of the first decelerator 200 may be achieved. Meanwhile, the rotational force of the rotary shaft 110 may be transmitted to the first sun gear 220 via the first shaft member 210, and the rotational force of the first sun gear 220 may be transmitted to the first carrier 250 via the first planetary gear 230. Thus, during this transmission, a speed reduction in the rotation speed may be established. The description of the speed reduction process of the rotation speed is replaced with the driving principle of a planetary gear decelerator widely known in the related art.

Continuing to refer to FIGS. 1 and 3, the second decelerator 300 includes: a second shaft member 310 fixed to the first carrier 250 and coupled thereto; and a second sun gear 320 fixed to the second shaft member 310. Thus, the rotational force of the first carrier 250 may be transmitted to the second sun gear 320 via the second shaft member 310. In one example, as illustrated in FIG. 1, the second shaft member 310 may be inserted into the first carrier 250 and coupled thereto.

In addition, the second decelerator 300 includes: a second planetary gear 330 provided on the outside of the second sun gear 320 in the radial direction R and engaging with the second sun gear 320; a second ring gear 340 provided on the outside of the second planetary gear 330 in the radial direction R and engaging with the second planetary gear 330; and a second carrier 350 coupled to the second planetary gear 330. Here, according to one example of the present invention, the second shaft member 310 and the second sun gear 320 may be formed separately from each other. Meanwhile, the rotational force of the first carrier 250 may be transmitted to the second sun gear 320 via the second shaft member 310, and the rotational force of the second sun gear 320 may be transmitted to the second carrier 350 via the second planetary gear 330. Thus, during this transmission, a speed reduction in the rotation speed may be established. The description of the speed reduction process of the rotation speed is replaced with the driving principle of a planetary gear decelerator widely known in the related art.

Meanwhile, as illustrated in FIG. 1, the wheel bearing 400 includes: an inner race 410 fixed to the outside of the second ring gear 340 in the radial direction R; an outer race 420 provided on the outside of the inner race 410 in the radial direction R; and a rolling body 430 provided between the inner race 410 and the outer race 420.

Here, according to the present invention, the second decelerator 300 is provided inside the wheel bearing 400 in the radial direction R, and the second decelerator 300 and the wheel bearing 400 overlap with each other in the width direction W. More specifically, referring to FIG. 1, each of the second shaft member 310, the second sun gear 320, the second planetary gear 330, and the second ring gear 340 overlap with the inner race 410 and the outer race 420 in the width direction W perpendicular to the radial direction R. Thus, according to the present invention, spaces occupied by the second decelerator 300 and the wheel bearing 400 in the power transmission device 10 may be minimized.

Continuing to refer to FIG. 1, the motor 100, the first decelerator 200, and the second decelerator 300, which are provided in the power transmission device 10 according to the present invention, may be arranged coaxially with each other. That is, according to the present invention, the center of the first decelerator 200 in the radial direction R and the center of the second decelerator 300 in the radial direction R may be positioned on a virtual axis A extending along the longitudinal direction of the rotary shaft 110. This can be understood as that the rotary shaft 110, the first shaft member 210, the second shaft member 310 are arranged on a straight line.

FIG. 4 is a side view illustrating the first shaft member and the first sun gear which are provided in the first decelerator of the power transmission device according to the present invention, and FIG. 5 is a side view illustrating the second sun gear provided in the second decelerator of the power transmission device according to the present invention.

Referring to FIGS. 4 and 5, each of the first sun gear 220 and the second sun gear 320 in the power transmission device 10 according to the present invention may include a helical gear region. A helical gear represents a gear having a shape in which gear teeth formed on the outer surface of the gear are inclined relative to the axial direction. More specifically, the first sun gear 220 may include a first helical gear region 222, and the second sun gear 320 may include a second helical gear region 322.

As described above, the helical gear is formed such that the gear teeth are inclined relative to the axial direction of the gear, and thus the gear teeth of the helical gear may have a certain angle with respect to the axial direction. In the specification, the angle formed between the gear teeth and the axial direction of the helical gear is defined as a helix angle.

Here, according to the present invention, a helix angle θ1 of the first helical gear region 222 and a helix angle θ2 of the second helical gear region 322 may be formed in opposite directions to each other. This may be understood as that a direction, in which gear teeth in the first helical gear region 222 are twisted relative to the axial direction of the first sun gear 220, is opposite to a direction, in which gear teeth in the second helical gear region 322 are twisted relative to the axial direction of the second sun gear 320. This may be to cancel out an axial force generated by the first helical gear region 222 when the first sun gear 220 rotates and an axial force generated by the second helical gear region 322 when the second sun gear 320 rotates, thereby reducing loads applied to axial force support bearings 800 which are provided near the first decelerator 200 and the second decelerator 300 and will be described later. In one example, the helix angle θ1 of the first helical gear region 222 and the helix angle θ2 of the second helical gear region 322 may be formed symmetrically to each other. This may be understood as that two helix angles are formed in opposite directions, and the sizes of these two helix angles are the same or correspond to each other.

Meanwhile, according to the present invention, the first ring gear 240 and the second ring gear 340 may be fixed without rotation during a process in which the rotational force of the motor 100 is transmitted to the second decelerator 300 via the first decelerator 200.

More specifically, continuing to refer to FIG. 1, the power transmission device 10 according to the present invention may further include a housing member 500 that accommodates the first decelerator 200. Here, the first ring gear 240 may be fixed and coupled to the housing member 500. Also, the second ring gear 340 may be fixed and coupled to the inner race 410 of the wheel bearing 400.

In addition, the power transmission device 10 may further include a bolt member 550 which passes through the inner race 410 and the housing member 500 and fixes the inner race 410 to the housing member 500. Thus, according to the present invention, the second ring gear 340 may be fixed to the housing member 500 via the inner race 410.

Meanwhile, the power transmission device 10 according to the present invention as described above may be configured to provide a driving force to a wheel 1 provided in an automobile. Furthermore, the power transmission device 10 may further include a component that provides the wheel 1 with a braking force.

More specifically, the power transmission device 10 may further include: a brake disc assembly 600 provided on one side of the second decelerator 300; and a fastening member 650 which passes through the second carrier 350 and the brake disc assembly 600 and fixes the second carrier 350 to the brake disc assembly 600. Here, as illustrated in FIG. 1, according to one example of the present invention, each of the first decelerator 200 and the second decelerator 300 may be accommodated in an inner space of the brake disc assembly 600.

Meanwhile, referring to FIGS. 2 and 3, a spline region 252 may be formed in an inner surface of the first carrier 250, and the second shaft member 310 may be inserted into the spline region 252 and fixed thereto. Accordingly, the second shaft member 310 and the first carrier 250 may be coupled and fixed to each other.

Also, the first sun gear 220 is accommodated in an inner space of the first carrier 250 and may face the spline region 252 descried above in the width direction W. In addition, as illustrated in FIG. 2, the power transmission device 10 according to the present invention may further include a first support bearing 700 which is provided on one side of the first sun gear 220 in the width direction W and provided on the outside of the first shaft member 210 in the radial direction R. In one example, the first support bearing 700 may be a thrust bearing.

Here, according to the present invention, the maximum outer diameter X of the first support bearing 700 described above in the radial direction R may be less than or equal to the maximum inner diameter Y of the spline region 252 in the radial direction R. The first support bearing 700 may be located inside the first carrier 250 via the spline region 252, and the first support bearing 700 may be more easily mounted when the maximum outer diameter X of the first support bearing 700 in the radial direction R is less than the maximum inner diameter Y of the spline region 252 in the radial direction R as described above. Meanwhile, first support bearings 700 may be provided on both sides of the first sun gear 220 in the width direction W.

Continuing to refer to FIG. 3, the power transmission device 10 may further include a second support bearing 750 which is provided on the outside of the second shaft member 310 in the radial direction R. In one example, the second support bearing 750 may be a thrust bearing. More specifically, the second support bearing 750 may be provided on one side of the second sun gear 320 in the width direction W. Here, according to the present invention, the maximum outer diameter Z of the second support bearing 750 described above in the radial direction R may be greater than the maximum outer diameter O of the second sun gear 320 in the radial direction R. Meanwhile, the second support bearing 750 may be provided between the second sun gear 320 and the first carrier 250 in the width direction W (see FIGS. 1 and 3).

Also, the power transmission device 10 may further include an axial force support bearing 800 for supporting an axial force generated by the driving of the first decelerator 200 and the second decelerator 300. More specifically, as illustrated in FIGS. 1 to 3, one of axial force support bearings 800 may be provided between the first carrier 250 and the housing member 500 in the width direction W and the radial direction R, and another one may be further provided between the second sun gear 320 and the second carrier 350 in the width direction W.

### Automobile

An automobile according to the present invention may include: a power transmission device 10; and a wheel 1 to which the power transmission device 10 is coupled.

Here, the power transmission device 10 may include: a motor 100 including a rotary shaft 110; a first decelerator 200 coupled to the rotary shaft 110 of the motor 100 and receiving power from the rotary shaft 110; a second decelerator 300 coupled to the first decelerator 200 and receiving the power from the first decelerator 200; and a wheel bearing 400 coupled to one side of the second decelerator 300. A portion of the first decelerator 200 may be inserted into the rotary shaft 110 and coupled thereto.

Meanwhile, the contents described above with respect to the power transmission device of the present invention may also be applied, in the same manner, to the automobile according to the present invention.

According to the present invention, the space occupied by the plurality of decelerators in the indirect driving-type in-wheel system may be minimized, thereby reducing the size of the in-wheel system and achieving the large speed reduction ratio.

## Claims

1. A power transmission device (10) comprising:
a motor (100) comprising a rotary shaft (110);
a first decelerator (200), coupled to the rotary shaft (110) of the motor (100), configured to receive power from the rotary shaft (110);
a second decelerator (300), coupled to the first decelerator (200), configured to receive the power from the first decelerator (200); and
a wheel bearing (400) coupled to one side of the second decelerator (300),
wherein a portion of the first decelerator (200) is configured to insert into the rotary shaft (110) and couple thereto,
wherein the first decelerator (200) comprises:
a first shaft member (210) having a partial region configured to insert into the rotary shaft (110) and couple thereto;
a first sun gear (220) fixed to the first shaft member (210);
a first planetary gear (230) disposed on an outer surface of the first sun gear (220) in a radial direction (R) and configured to engage with the first sun gear (220);
a first ring gear (240) disposed on an outer surface of the first planetary gear (230) in the radial direction (R) and configured to engage with the first planetary gear (230); and
a first carrier (250) coupled to the first planetary gear (230),
wherein the second decelerator (300) comprises:
a second shaft member (310);
a second sun gear (320);
a second support bearing (750) disposed on the outer surface of the second shaft member (310) in the radial direction (R) and disposed on one side of the second sun gear (320) in a width direction (W);
a second planetary gear (330) disposed on an outer surface of the second sun gear (320) in the radial direction (R) and configured to engage with the second sun gear (320);
a second ring gear (340) disposed on an outer surface of the second planetary gear (330) in the radial direction (R) and configured to engage with the second planetary gear (330); and
a second carrier (350) coupled to the second planetary gear (330), wherein the wheel bearing (400) comprises:
an inner race (410);
an outer race (420) disposed on an outer surface of the inner race (410) in the radial direction (R); and
a rolling body (430) disposed between the inner race (410) and the outer race (420),
**characterized in that**,
the second shaft member (310) is fixed to the first carrier (250) and coupled thereto;
the second sun gear (320) is fixed to the second shaft member (310); and
the inner race (410) is fixed to an outer surface of the second ring gear (340) in the radial direction (R);
wherein each of the second shaft member (310), the second sun gear (320), the second planetary gear (330), and the second ring gear (340) overlaps with the inner race (410) and the outer race (420) in the width direction (W) perpendicular to the radial direction (R).

2. The power transmission device (10) of claim 1, wherein the first shaft member (210) and the first sun gear (220) are integrally formed.

3. The power transmission device (10) of claim 1 or 2, wherein the second shaft member (310) and the second sun gear (320) are formed separately from each other.

4. The power transmission device (10) of any one of claims 1 to 3, wherein centers of the first decelerator (200) and the second decelerator (300) in a radial direction (R) are positioned on a virtual axis extending along a longitudinal direction of the rotary shaft (110).

5. The power transmission device (10) of any one of claims 1 to 4, wherein the first sun gear (220) and the second sun gear (320) comprise a first helical gear region (222) and a second helical gear region (322), respectively, and
a helix angle (θ1) of the first helical gear region (222) and a helix angle (θ2) of the second helical gear region (322) are formed in opposite directions.

6. The power transmission device (10) of claim 5, wherein the helix angle (θ1) of the first helical gear region (222) and the helix angle (θ2) of the second helical gear region (322) are formed symmetrically to each other.

7. The power transmission device (10) of any one of claims 1 to 6, further comprising a housing member (500) configured to accommodate the first decelerator (200),
wherein the first ring gear (240) is fixed and coupled to the housing member (500).

8. The power transmission device (10) of claim 7, wherein the second ring gear (340) is fixed and coupled to the inner race (410).

9. The power transmission device (10) of claim 8, further comprising a bolt member (550) configured to pass through the inner race (410) and the housing member (500) and fix the inner race (410) to the housing member (500).

10. The power transmission device (10) of any one of claims 1 to 9, further comprising:
a brake disc assembly (600) disposed on one side of the second decelerator (300); and
a fastening member (650) configured to pass through the second carrier (350) and the brake disc assembly (600) and fix the second carrier (350) to the brake disc assembly (600).

11. The power transmission device (10) of claim 10, wherein each of the first decelerator (200) and the second decelerator (300) is accommodated in an inner space of the brake disc assembly (600).

12. The power transmission device (10) of any one of claims 1 to 11, wherein a spline region (252) is formed in an inner surface of the first carrier (250), and
the second shaft member (310) is inserted into the spline region (252) and fixed thereto.

13. The power transmission device (10) of claim 12, further comprising a first support bearing (700) disposed on one side of the first sun gear (220) in the width direction (W) perpendicular to the radial direction (R),
wherein the first sun gear (220) is accommodated in an inner space of the first carrier (250) and faces the spline region (252) in the width direction (W), and
a maximum outer diameter of the first support bearing (700) in the radial direction (R) is less than or equal to a maximum inner diameter of the spline region (252) in the radial direction (R).

14. The power transmission device (10) of any one of claims 1 to 13, wherein a maximum outer diameter of the second support bearing (750) in the radial direction (R) is greater than a maximum outer diameter of the second sun gear (320) in the radial direction (R).

15. An automobile comprising:
a wheel (1); and
the power transmission device (10) according to any one of claims 1 to 14, which is coupled to the wheel (1).

## Patentansprüche

1. Kraftübertragungsvorrichtung (10), umfassend:
einen Motor (100), der eine Drehwelle (110) umfasst;
ein erstes Untersetzungsgetriebe (200), das mit der Drehwelle (110) des Motors (100) gekoppelt und dazu eingerichtet ist, Leistung von der Drehwelle (110) aufzunehmen;
ein zweites Untersetzungsgetriebe (300), das mit dem ersten Untersetzungsgetriebe (200) gekoppelt und dazu eingerichtet ist, die Leistung von dem ersten Untersetzungsgetriebe (200) aufzunehmen; und
ein Radlager (400), das mit einer Seite des zweiten Untersetzungsgetriebes (300) gekoppelt ist,
wobei ein Abschnitt des ersten Untersetzungsgetriebes (200) dazu eingerichtet ist, in die Drehwelle (110) eingesetzt und mit dieser gekoppelt zu werden,
wobei das erste Untersetzungsgetriebe (200) umfasst:
ein erstes Wellenelement (210), das einen Teilbereich aufweist, der dazu eingerichtet ist, in die Drehwelle (110) eingesetzt und mit dieser gekoppelt zu werden;
ein erstes Sonnenrad (220), das an dem ersten Wellenelement (210) befestigt ist;
ein erstes Planetenrad (230), das in einer Radialrichtung (R) an einer Außenfläche des ersten Sonnenrads (220) angeordnet und dazu eingerichtet ist, mit dem ersten Sonnenrad (220) in Eingriff zu stehen;
ein erstes Hohlrad (240), das in der Radialrichtung (R) an einer Außenfläche des ersten Planetenrads (230) angeordnet und dazu eingerichtet ist, mit dem ersten Planetenrad (230) in Eingriff zu stehen; und
einen ersten Träger (250), der mit dem ersten Planetenrad (230) gekoppelt ist,
wobei das zweite Untersetzungsgetriebe (300) umfasst:
ein zweites Wellenelement (310);
ein zweites Sonnenrad (320);
ein zweites Stützlager (750), das in der Radialrichtung (R) an der Außenfläche des zweiten Wellenelements (310) und in einer Breitenrichtung (W) auf einer Seite des zweiten Sonnenrads (320) angeordnet ist;
ein zweites Planetenrad (330), das in der Radialrichtung (R) an einer Außenfläche des zweiten Sonnenrads (320) angeordnet und dazu eingerichtet ist, mit dem zweiten Sonnenrad (320) in Eingriff zu stehen;
ein zweites Hohlrad (340), das in der Radialrichtung (R) an einer Außenfläche des zweiten Planetenrads (330) angeordnet und dazu eingerichtet ist, mit dem zweiten Planetenrad (330) in Eingriff zu stehen; und
einen zweiten Träger (350), der mit dem zweiten Planetenrad (330) gekoppelt ist,
wobei das Radlager (400) umfasst:
einen Innenring (410);
einen Außenring (420), der in der Radialrichtung (R) an einer Außenfläche des Innenrings (410) angeordnet ist; und
einen Wälzkörper (430), der zwischen dem Innenring (410) und dem Außenring (420) angeordnet ist,
**dadurch gekennzeichnet, dass**
das zweite Wellenelement (310) an dem ersten Träger (250) befestigt und mit diesem gekoppelt ist;
das zweite Sonnenrad (320) an dem zweiten Wellenelement (310) befestigt ist; und
der Innenring (410) in der Radialrichtung (R) an einer Außenfläche des zweiten Hohlrads (340) befestigt ist;
wobei sich das zweite Wellenelement (310), das zweite Sonnenrad (320), das zweite Planetenrad (330) und das zweite Hohlrad (340) jeweils in der zur Radialrichtung (R) senkrechten Breitenrichtung (W) mit dem Innenring (410) und dem Außenring (420) überlappen.

2. Kraftübertragungsvorrichtung (10) nach Anspruch 1, wobei das erste Wellenelement (210) und das erste Sonnenrad (220) einstückig ausgebildet sind.

3. Kraftübertragungsvorrichtung (10) nach Anspruch 1 oder 2, wobei das zweite Wellenelement (310) und das zweite Sonnenrad (320) getrennt voneinander ausgebildet sind.

4. Kraftübertragungsvorrichtung (10) nach einem der Ansprüche 1 bis 3, wobei Mittelpunkte des ersten Untersetzungsgetriebes (200) und des zweiten Untersetzungsgetriebes (300) in einer Radialrichtung (R) auf einer gedachten Achse angeordnet sind, die sich entlang einer Längsrichtung der Drehwelle (110) erstreckt.

5. Kraftübertragungsvorrichtung (10) nach einem der Ansprüche 1 bis 4, wobei das erste Sonnenrad (220) und das zweite Sonnenrad (320) jeweils einen ersten Schrägverzahnungsbereich (222) bzw. einen zweiten Schrägverzahnungsbereich (322) umfassen und
ein Schrägungswinkel (θ1) des ersten Schrägverzahnungsbereichs (222) und ein Schrägungswinkel (θ2) des zweiten Schrägverzahnungsbereichs (322) in entgegengesetzten Richtungen ausgebildet sind.

6. Kraftübertragungsvorrichtung (10) nach Anspruch 5, wobei der Schrägungswinkel (θ1) des ersten Schrägverzahnungsbereichs (222) und der Schrägungswinkel (θ2) des zweiten Schrägverzahnungsbereichs (322) zueinander symmetrisch ausgebildet sind.

7. Kraftübertragungsvorrichtung (10) nach einem der Ansprüche 1 bis 6, ferner umfassend ein Gehäuseelement (500), das dazu eingerichtet ist, das erste Untersetzungsgetriebe (200) aufzunehmen,
wobei das erste Hohlrad (240) an dem Gehäuseelement (500) befestigt und mit diesem gekoppelt ist.

8. Kraftübertragungsvorrichtung (10) nach Anspruch 7, wobei das zweite Hohlrad (340) an dem Innenring (410) befestigt und mit diesem gekoppelt ist.

9. Kraftübertragungsvorrichtung (10) nach Anspruch 8, ferner umfassend ein Bolzenelement (550), das dazu eingerichtet ist, durch den Innenring (410) und das Gehäuseelement (500) hindurchzutreten und den Innenring (410) an dem Gehäuseelement (500) zu befestigen.

10. Kraftübertragungsvorrichtung (10) nach einem der Ansprüche 1 bis 9, ferner umfassend:
eine Bremsscheibenanordnung (600), die auf einer Seite des zweiten Untersetzungsgetriebes (300) angeordnet ist; und
ein Befestigungselement (650), das dazu eingerichtet ist, durch den zweiten Träger (350) und die Bremsscheibenanordnung (600) hindurchzutreten und den zweiten Träger (350) an der Bremsscheibenanordnung (600) zu befestigen.

11. Kraftübertragungsvorrichtung (10) nach Anspruch 10, wobei sowohl das erste Untersetzungsgetriebe (200) als auch das zweite Untersetzungsgetriebe (300) in einem Innenraum der Bremsscheibenanordnung (600) aufgenommen sind.

12. Kraftübertragungsvorrichtung (10) nach einem der Ansprüche 1 bis 11, wobei ein Keilverzahnungsbereich (252) an einer Innenfläche des ersten Trägers (250) ausgebildet ist und
das zweite Wellenelement (310) in den Keilverzahnungsbereich (252) eingesetzt und daran befestigt ist.

13. Kraftübertragungsvorrichtung (10) nach Anspruch 12, ferner umfassend ein erstes Stützlager (700), das in der zur Radialrichtung (R) senkrechten Breitenrichtung (W) auf einer Seite des ersten Sonnenrads (220) angeordnet ist,
wobei das erste Sonnenrad (220) in einem Innenraum des ersten Trägers (250) aufgenommen ist und dem Keilverzahnungsbereich (252) in der Breitenrichtung (W) gegenüberliegt, und
ein maximaler Außendurchmesser des ersten Stützlagers (700) in der Radialrichtung (R) kleiner als oder gleich einem maximalen Innendurchmesser des Keilverzahnungsbereichs (252) in der Radialrichtung (R) ist.

14. Kraftübertragungsvorrichtung (10) nach einem der Ansprüche 1 bis 13, wobei ein maximaler Außendurchmesser des zweiten Stützlagers (750) in der Radialrichtung (R) größer als ein maximaler Außendurchmesser des zweiten Sonnenrads (320) in der Radialrichtung (R) ist.

15. Kraftfahrzeug, umfassend:
ein Rad (1); und
die Kraftübertragungsvorrichtung (10) nach einem der Ansprüche 1 bis 14, die mit dem Rad (1) gekoppelt ist.

## Revendications

1. Dispositif de transmission de puissance (10) comprenant :
un moteur (100) comprenant un arbre rotatif (110);
un premier décélérateur (200), couplé à l'arbre rotatif (110) du moteur (100), conçu pour recevoir la puissance provenant de l'arbre rotatif (110);
un deuxième décélérateur (300), couplé au premier décélérateur (200), conçu pour recevoir la puissance provenant du premier décélérateur (200); et
un roulement de moyeu (400) accouplé à un côté du deuxième décélérateur (300),
dans lequel une partie du premier décélérateur (200) est conçue pour s'insérer dans l'arbre rotatif (110) et s'y accoupler,
dans lequel le premier dispositif décélérateur (200) comprend:
un premier élément d'arbre (210) comportant une partie conçue pour s'insérer dans l'arbre rotatif (110) et s'y accoupler;
un premier planétaire (220) fixé au premier élément d'arbre (210);
un premier train planétaire (230) disposé sur une surface extérieure du premier planétaire (220) dans une direction radiale (R) et conçu pour s'engrener avec le premier planétaire (220);
une première couronne dentée (240) disposée sur une surface extérieure du premier train planétaire (230) dans la direction radiale (R) et conçue pour s'engrener avec le premier train planétaire (230); et
un premier porte-satellites (250) couplé au premier train planétaire (230),
dans lequel le deuxième décélérateur (300) comprend:
un deuxième élément d'arbre (310);
un deuxième planétaire (320);
un deuxième palier d'appui (750) disposé sur la surface extérieure du deuxième élément d'arbre (310) dans la direction radiale (R) et situé d'un côté du deuxième planétaire (320) dans le sens de la largeur (W);
un deuxième train planétaire (330) disposé sur une surface extérieure du deuxième planétaire (320) dans la direction radiale (R) et conçu pour s'engrener avec le deuxième train solaire (320);
une deuxième couronne dentée (340) disposée sur une surface extérieure du deuxième train planétaire (330) dans la direction radiale (R) et conçue pour s'engrener avec le deuxième train planétaire (330); et
un deuxième porte-satellites (350) couplé au deuxième train planétaire (330),
dans lequel le roulement de moyeu (400) comprend:
une bague intérieure (420);
une bague extérieure (420) disposée sur une surface extérieure de la bague intérieure (410) dans la direction radiale (R); et
un corps de roulement (430) disposé entre la bague intérieure (410) et la bague extérieure (420),
**caractérisé en ce que** le deuxième élément d'arbre (310) est fixé au premier porte-satellites (250) et accouplé à celui-ci;
le deuxième planétaire solaire (320) est fixé au deuxième élément d'arbre (310); et
la bague intérieure (410) est fixée à une surface extérieure de la deuxième couronne dentée (340) dans la direction radiale (R);
dans lequel le deuxième élément d'arbre (310), le deuxième planétaire (320), le deuxième planétaire (330) et la deuxième couronne dentée (340) chevauchent la bague intérieure (410) et la bague extérieure (420) dans le sens de la largeur (W) perpendiculaire à la direction radiale (R).

2. Dispositif de transmission de puissance (10) selon la revendication 1, dans lequel le premier élément d'arbre (210) et le premier planétaire (220) sont formés d'un seul tenant.

3. Dispositif de transmission de puissance (10) selon la revendication 1 ou 2, dans lequel le deuxième élément d'arbre (310) et le deuxième planétaire (320) sont formés séparément l'un de l'autre.

4. Dispositif de transmission de puissance (10) selon l'une quelconque des revendications 1 à 3, dans lequel les centres du premier décélérateur (200) et du deuxième décélérateur (300) dans la direction radiale (R) sont situés sur un axe virtuel s'étendant dans la direction longitudinale de l'arbre rotatif (110).

5. Dispositif de transmission de puissance (10) selon l'une quelconque des revendications 1 à 4, dans lequel le premier planétaire (220) et le deuxième planétaire (320) comportent respectivement une première zone d'engrenage hélicoïdale (222) et une deuxième zone d'engrenage hélicoïdale (322), et
l'angle d'hélice (θ1) de la première zone d'engrenage hélicoïdale (222) et l'angle d'hélice (θ2) de la deuxième zone d'engrenage hélicoïdale (322) sont orientés dans des directions opposées.

6. Dispositif de transmission de puissance (10) selon la revendication 5, dans lequel l'angle d'hélice (θ1) de la première zone d'engrenage hélicoïdale (222) et l'angle d'hélice (θ2) de la deuxième zone d'engrenage hélicoïdale (322) sont formés de manière symétrique l'un par rapport à l'autre.

7. Dispositif de transmission de puissance (10) selon l'une quelconque des revendications 1 à 6, comprenant en outre un élément de boîtier (500) conçu pour loger le premier décélérateur (200),
dans lequel la première couronne dentée (240) est fixe et couplée à l'élément de boîtier (500).

8. Dispositif de transmission de puissance (10) selon la revendication 7, dans lequel la deuxième couronne dentée (340) est fixe et couplée à la bague intérieure (410).

9. Dispositif de transmission de puissance (10) selon la revendication 8, comprenant en outre un élément boulon (550) conçu pour traverser la bague intérieure (410) et l'élément de boîtier (500) et pour fixer la bague intérieure (410) à l'élément de boîtier (500).

10. Dispositif de transmission de puissance (10) selon l'une quelconque des revendications 1 à 9, comprenant en outre:
un ensemble disque de frein (600) disposé d'un côté du deuxième décélérateur (300); et
un élément de fixation (650) conçu pour traverser le deuxième porte-satellites (350) et l'ensemble disque de frein (600) et pour fixer le deuxième porte-satellites (350) à l'ensemble disque de frein (600).

11. Dispositif de transmission de puissance (10) selon la revendication 10, dans lequel le premier décélérateur (200) et le deuxième décélérateur (300) sont tous deux logés dans un espace intérieur de l'ensemble disque de frein (600).

12. Dispositif de transmission de puissance (10) selon l'une quelconque des revendications 1 à 11, dans lequel une zone cannelée (252) est formée dans une surface intérieure du premier porte-satellites (250), et
le deuxième élément d'arbre (310) est inséré dans la zone cannelée (252) et y est fixé.

13. Dispositif de transmission de puissance (10) selon la revendication 12, comprenant en outre un premier palier d'appui (700) disposé d'un côté du premier planétaire (220) dans le sens de la largeur (W) perpendiculaire à la direction radiale (R),
dans lequel le premier planétaire (220) est logé dans un espace intérieur du premier porte-satellites (250) et fait face à la zone cannelée (252) dans le sens de la largeur (W), et
le diamètre extérieur maximal du premier palier d'appui (700) dans la direction radiale (R) est inférieur ou égal au diamètre intérieur maximal de la zone cannelée (252) dans la direction radiale (R).

14. Dispositif de transmission de puissance (10) selon l'une quelconque des revendications 1 à 13, dans lequel le diamètre extérieur maximal du deuxième palier d'appui (750) dans la direction radiale (R) est supérieur au diamètre extérieur maximal du deuxième planétaire (320) dans la direction radiale (R).

15. Automobile comprenant:
une roue (1); et
le dispositif de transmission de puissance (10) selon l'une quelconque des revendications 1 à 14, qui est accouplé à la roue (1).
